# EUROPEAN PATENT SPECIFICATION

(11) **EP 2 181 603 B1**
(45) Date of publication and mention of the grant of the patent: **16.08.2017**
(21) Application number: 09172698.4
(22) Date of filing: 09.10.2009
(51) Int. Cl.: A23C 9/154, A23C 19/076, A23C 19/082, A23C 19/084, A23C 19/09, A23C 19/093, A23C 19/097

(54) **Hot temperature aerated dairy product having shelf stable properties**
Bei hoher Temperatur aufgeschäumtes Milchprodukt mit lagerbeständigen Eigenschaften
Produit laitier aéré à haute température doté de propriétés longue conservation

(30) Priority: 30.10.2008 US 261767
(43) Date of publication of application: 05.05.2010
(73) Proprietor: Intercontinental Great Brands LLC, East Hanover, NJ 07936 (US)
(72) Inventor: Barnard, David John, Arlington Heights, IL 60004 (US); Cha, Alice Shen, Northbrook, IL 60062 (US); Lincourt, Richard Harold, Mundelein, IL 60060 (US)
(74) Representative: Smaggasgale, Gillian Helen

(56) References cited:
- EP-A1- 0 289 096
- DE-A1- 1 922 526
- DE-C1- 3 314 551
- GB-A- 999 150
- JP-A- 2 092 238
- US-A- 5 250 316
- US-A1- 2004 241 305
- DATABASE WPI Week 200835 Thomson Scientific, London, GB; AN 2008-F26767 XP002677283, & RU 2 325 067 C2 (DAIRY IND RES INST) 27 May 2008 (2008-05-27)
- KARIM A A ET AL: "Gelatin alternatives for the food industry: recent developments, challenges and prospects", TRENDS IN FOOD SCIENCE AND TECHNOLOGY, ELSEVIER SCIENCE PUBLISHERS, GB, vol. 19, no. 12, 1 December 2008 (2008-12-01), pages 644-656, XP025695190, ISSN: 0924-2244, DOI: 10.1016/J.TIFS.2008.08.001 [retrieved on 2008-08-12]

## Description

### Field

The present disclosure relates generally to hot-temperature aerated dairy products having shelf stable properties.

### Background

It is common for dairy products to be aerated prior to packaging in order to give the dairy product a desirable fluffy, light texture and appearance and a spreadable or dippable texture. However, after aeration, such dairy products cannot readily be made shelf stable. If a dairy product is aerated under, or subsequently treated with, high temperatures, i.e., those temperatures necessary to enable the dairy product and enable it to be shelf stable, the aerated dairy product typically cannot maintain the aerated cell structure. Therefore, aeration of dairy products typically is carried out at lower temperatures, i.e., temperatures that do not aseptically treat the dairy product, and thus will subsequently require more costly aseptic packaging in order to maintain a reasonable shelf-stability of the product. In these cases, unless the dairy products are first treated with high temperatures prior to aeration at lower temperatures and maintained under strictly sterile conditions until packaged, they cannot be considered shelf stable.

Therefore, manufacturing a shelf stable dairy product having an acceptable aerated texture is typically only possible where the dairy product has a low water activity (i.e., Aw less than 0.85, which often produces a firm, chewy, undesirable texture) or if the dairy product is aerated after first heat processing and cooling to moderate temperatures (e.g., <100°F (37.8°C)), followed by aseptic filling in hermetically sealed packaging -- usually a very costly process and packaging combination. Without these functional and/or processing parameters, the aerated dairy products often require refrigerated storage and, even then, they often have relatively short shelf lives.

Commercially available whipped and/or aerated cream cheeses are usually not shelf stable. Attempts to fill and package often at high temperatures results in significant damage to the desired aerated structure. Therefore, commercially whipped and/or aerated cream cheese products are aerated at lower temperatures and cooled before packaging. German Patent No. DE 3314551 discloses a foamed processed cheese which contains up to 20% by weight of yoghurt or another coagulated milk product. The ingredients are mixed and homogenised then the homogenised mixture if foamed at 60 - 95°C in the presence of an inert gas before being packaged.

U.S. Patent No. 6,503,553 discloses a processed dairy product that is first aerated while at a cold temperature (i.e., about 4°C) and is then mixed with a hot (greater than 48°C (118°F)) aqueous gelatin solution. Upon mixing, the dairy product, i.e., creamy base component, is substantially deaerated before or during addition of further food components such as the gelatin. Only this deaerated form of the processed dairy product provides a stable product which can be frozen for long term storage. The resulting processed dairy product requires storage under refrigeration or frozen conditions; moreover, it is deaerated.

Some dairy based products can be manufactured with various additives and stabilizers. International Publication No. WO 2004/016094 discloses a frozen dessert composition with an added starch hydrolysate to impart heat shock resistance and maintain good taste and texture. Some formulations may include stabilizing gums to assist in heat shock resistance; such stabilizing gums (up to about 0.2%) can result in an unacceptable gummy mouth feel and also tend to make the final composition firmer than desired. Aeration occurs only after pasteurization, homogenization, and cooling to about 4°C. These are not shelf stable and require frozen storage to maintain the aerated cell structure for any appreciable time.

Typically, when stabilizers are used in dairy products the amount added to the resulting product must be adjusted carefully or else the final texture and consistency does not resemble the food product desired. For instance, if too much stabilizer is added, then a chewy and/or rubbery texture is obtained. If not enough stabilizer is used, then the texture cannot hold aeration well. Furthermore, syneresis can occur, where the aerated product is too soft at room temperature, causing water or other liquids to leach from the dairy product.

A dairy product, such as a cappuccino, suitable for frothing by mechanical means, is disclosed in European Patent Application No. 1329162 . The resulting cappuccino drink has a froth or foam at its upper surface. The cappuccino drink contains customary milk components (i.e., skimmed, semi-skimmed, full fat milk) plus 0.3-2% hydrolysed milk protein. The dairy product can be prepared using a dried or concentrated dairy product that is reconstituted with water; the reconstituted product is suitable for frothing by mechanical means (i.e., shear forces or by application of a propellant gas). Due to the nature of the product the froth formed only needs to last long enough for the drink to be consumed. Additionally, the dairy product can contain less than 1% of certain gums and less than 2% of oligosaccharides or polysaccharides as fat substitutes, such as inulin or carrageenan.

Thus, there remains a need for high temperature treated aerated dairy products having shelf stability and a stable aerated structure. This invention provides such products.

### Summary

A high moisture dairy product and method of making the high moisture dairy product is disclosed. The high moisture dairy product can be aerated and packaged at high temperatures (i.e., greater than 140°F (60.0°C)) while still maintaining the aerated cell structure. Thus, according to the present invention, there is provided an aerated food composition comprising a dairy food base, a fat source at least partially comprising a high-melting point fat having a melting point temperature between 37.8°C to 43.3°C (100°F to 110° F), and a hydrocolloid-based stabilizer system in an amount effective to provide a high-moisture shelf stable, aerated dairy food product; wherein the dairy food product is aerated between 2 to 20% overrun at a temperature greater than 65.6°C (150°F) for microstability and subsequently filled into packages at a final temperature greater than 65.6°C (150°F) but less than 82.2°C (180°F) while maintaining its aerated structure; wherein the hydrocolloid-based system comprises: (1) two gums where one of the gums is gelatin in a range between 0.4% to 1% and the other gum is at a level that is equal to or less than an amount of the gelatin; or (2) at least three gums where one of the gums is gelatin or carrageenan; and wherein the dairy food product has a shelf life of at least three months at ambient temperature.

The high moisture shelf stable dairy product may comprise from 10 to 66% dairy food base, from 20 to 30% of the fat source, and from 0.5 to 2.5% hydrocolloid stabilizing system. The dairy food product can be aerated from 2% to 20% overrun at temperatures of at least 150°F (65.6°C) or higher. The aerated dairy mixture or product can be treated at high temperatures without adversely effecting the aerated structure. The fat source may further comprise a high melting point fat at 4.25% to 20% of the high melting point fat and is selected from the group consisting of palm oil, coconut oil, hydrogenated soybean oil, palm kernel oil, and low fat cream cheese.

The high moisture dairy products of the present invention, using a blend of hydrocolloid-based stabilizing ingredients, have sufficient viscosity to maintain the aerated structure in the high moisture dairy food at high temperatures. The hydrocolloid stabilizing system is stable at low pH conditions (i.e., 3.7 to 4.6) and can be aerated at high temperatures; the aerated structure is maintained at high temperatures and then upon cooling and during storage. Upon cooling, the high moisture dairy products do not become excessively viscous or gummy. These dairy foods can be aerated and then processed and packaged at high temperatures resulting in shelf stability at low cost, and still supply pleasant eating qualities upon cooling. Furthermore, the hot-aerated and hot-filled dairy products do not require costly aseptic processing and packaging, as do shelf stable products which are aerated at moderate or low temperatures before packaging. The hot-aerated dairy products are shelf stable at ambient temperature and do not require refrigeration. These dairy products are ideally suited for use as on-the-go snacks. Moreover, they are ideally suited for use in areas where refrigeration is not available and/or unreliable.

According to a second aspect of the present invention there is provided a method of making an aerated dairy food composition, the method comprising: mixing 10% to 66% dairy food base, 20% to 30% fat where between 4.25% to 20% of the total fat includes a high melting point fat having a melting point temperature between 37.8°C to 43.3°C (100°F to 110°F), and 0.5% to 2.5% of a stabilizer system comprising: (1) two gums where one of the gums is gelatin in a range between 0.4% to 1% and the other gum is at a level that is equal to or less than an amount of the gelatin; or (2) at least three gums where one of the gums is gelatin or carrageenan, together to form a mixture; aerating the mixture to an aeration level of 2% to 20% overrun at a temperature of at least 65.6°C (150°F); filling packages with the aerated dairy food product at temperatures between 65.6°C to 82.2°C (150°F to 180°F); sealing the packages with a hermetic seal after filling; and cooling the aerated dairy food product while in the package to provide an organoleptically-pleasing, shelf-stable, high-moisture aerated dairy food product having shelf stability of at least three months at ambient temperature.

### Brief Description of the Drawings

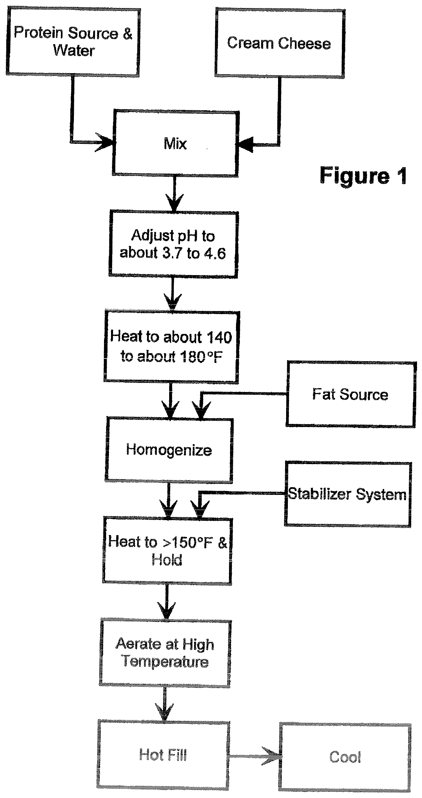

FIG. 1 provides a schematic flow diagram of a general method of making an aerated and shelf stable cream cheese product.

### Detailed Description

Shelf stable, aerated dairy products and methods of manufacture are provided. The dairy products comprise a dairy food base, a fat, and a hydrocolloid stabilizing system which can be collectively aerated at high temperatures (i.e., greater than 140°F (60.0°C)), and hot-filled into its respective packaging. The general method of this invention is illustrated in FIG. 1. In particular, the hydrocolloid stabilizer system can comprise at least a two gum blend. For a two gum blend, one gum is gelatin. In a three or more gum blend, one gum is either gelatin or carrageenan. The stabilizer helps to impart stability to the aerated dairy product, thus aiding in maintaining its aerated structure even at high temperatures. The level of aeration can be measured at 2% to 20% overrun. Furthermore, the fat includes a high melting point fat (having a melting point of from 100°F (37.8°C) to 110°F (43.3°C)) to aid in the stability of the aerated structure and resulting shelf stability. Additionally, the final product is easily "scoopable" such that it can easily be removed or scooped from the package using, for example, a spoon or cracker. The dairy product that results is shelf stable, i.e., does not require refrigeration or freezing, and does not require any type of aseptic packaging techniques upon hot-filling the packages after aeration at high temperatures.

"Overrun" refers to the increase in volume of the aerated product, and also is referred to as foaming capacity. It is measured according to the following equation: (volume of the food after aeration - volume of the food before aeration)/(volume of the food before aeration). It is reported as a percentage value. "Aerated" refers to the incorporation of a gas into a food material. For purposes herein, the gas is not particularly limited, and may be air, nitrogen, carbon dioxide, nitrous oxide, gas combinations, and so forth.

The dairy component comprises a dairy based food component, such as cream cheese. In one aspect, a cream cheese can be used that has not been aerated yet and can be provided in amounts between 10 and 66% by weight. In another aspect, a cream cheese that has not been aerated yet but may comprise a gum or other stabilizer can be used, however, typically such gums would be in amounts less than 1%. In yet another aspect, a cream cheese curd can be used after the separation from the whey component, but before addition of any stabilizers such that an unstabilized cream cheese component can be used as the dairy base component. Where cream cheese is used as the dairy component it can be preferable to add approximately 30-35% to the mixture, however, up to 66% can be added. The cream cheese component can comprise a full fat or light cream cheese. The amount of the dairy component is important to maintain a good level of protein and fat in the final product which can contribute to the final smooth and airy texture of the product. However, too much of the dairy component (i.e., >66%) may give a dairy fat level that is too high, especially where the dairy fat comprises mainly a low-melting point fat, so that it cannot hold air cells well in the matrix during cooling. Further, too high of a dairy component may also provide a very high lactose level that can result in lactose crystals which give a sandy texture to the final product.

The fat source can be provided in a total amount between 20% to 30% by weight. The fat source can be selected from the group comprising cream cheese (i.e., full fat or low fat cream cheese), coconut oil, palm oil, hydrogenated soybean oil, hydrogenated palm kernel oil, or any combination thereof. The fat source further comprises a high melting point fat that has a melting point between 100°F (37.8°C) to 110°F (43.3°C) in an amount between 4.25% to 20% by weight, which would contribute to the overall total fat content. In one aspect, the high melting point fat can comprise either an animal or vegetable fat, or a combination thereof. Some examples of high melting point fats can be palm oil, palm kernel oil, coconut oil, and hydrogenated soybean oil. Preferably, palm kernel oil can be used. A high-melting point fat is a required component of the total overall fat source.

Without wishing to be bound by theory, it is believed that such high-melting point fat helps maintain the gas cells in the matrix upon cooling. The product is packaged between 150°F (65.6°C) to 180°F (82.2°C) and as the product cools, air tries to escape from the air cell matrix. The high-melting point fat appears to trap the air cells during cooling, maintaining its aeration.

The stabilizer system can comprise a hydrocolloid-based stabilizer system provided in a total amount between 0.5% to 2.5% by weight. The hydrocolloid-based stabilizer system can comprise a blend of at least two gums, and can further comprise a blend of three or more gums. Additional stabilizers that can be used in the dairy product can comprise carob bean gum, carboxymethyl cellulose (CMC), xanthan gum, methocel, and the like. Where a two gum stabilizer system is used a first gum is gelatin and the second gum is a gum chosen from the group consisting of carob bean gum, carboxymethyl cellulose (CMC), xanthan gum, methocel, and the like; the second gum cannot be carrageenan. Where a three gum stabilizer system is used, the first gum is either gelatin or carrageenan and the remaining gums are selected from the group consisting of carob bean gum, carboxymethyl cellulose (CMC), xanthan gum, methocel, and the like; gelatin and carrageenan cannot be used together. The gums typically provide a thickness to the product at higher temperatures, and can provide a network or structure that can hold air or gas to aid in maintaining the aerated structure. The total amount of gums or stabilizers should not exceed 2.5%; if the level is too high, the product viscosity becomes too firm (i.e., 3000 Pa or higher). Likewise, if gelatin and carrageenan are used together, the product viscosity becomes too firm.

In one aspect, a two-gum system can be used as the stabilizer. Possible two gum systems for the stabilizer can comprise any two gums from the group mentioned above, as long as one of the gums is gelatin. Thus, blends such as carob gum and gelatin, or CMC and gelatin, and the like, can be used. The gelatin aids in providing the necessary network for maintaining aeration in the two gum system. In another aspect, systems containing three or more gums for the stabilizer can also be used. One of the gums must be either gelatin or carrageenan. For example, CMC, carob gum and gelatin can be combined, or CMC, carob gum, and carrageenan can be combined, and so on. Thus, gelatin is not always necessary in a three or more gum system; in that case, carrageenan, which has a gelatin-like structure, must be used. However, a three gum system should not contain both gelatin and carrageenan. Gelatin (or gelatin-like carrageenan) can maintain air cell structure upon cooling as well as providing a desirable melting characteristic to the product. When carrageenan is used, it is preferred to utilize the Kappa variety of carrageenan, i.e., K-carrageenan. There are three types of carrageenan; Kappa, Iota, and Lambda. K-carrageenan can form firm gels that are similar to gelatin, such that it can be used as a gelatin replacer. Therefore, wherever carrageenan is referenced in the application it should be understood that K-carrageenan is meant.

Without wishing to be bound by theory it is believed that gelatin or a gelatin-like substance, such as carrageenan, is needed to separate the air cells trapped within the matrix as the product cools, especially in a three gum system. Typically, gelatin melts at 100°F (37.8°C) but below that temperature it provides a rigid structure for the dairy product and keeps the air cells separated after aeration. If the gelatin or carrageenan total drops below a certain amount (i.e., less than 0.4% for gelatin or less than 0.1% for carrageenan) then the structure may collapse upon itself and form a dense, non-aerated structure. If a three-gum system does not include gelatin then, as stated above, it should include carrageenan. Furthermore, gelatin provides a number of other beneficial properties to the dairy food product such as increasing the gelling properties of the food product from a weak gel to a firm gel, providing emulsifier and foam stability (i.e., lowers the surface tension of the product enabling air incorporation, and surface active properties allow for a uniform dispersion of air cells), acting as a water binder to prevent water separation during storage, and acting as a texture builder (i.e., contributing to a smooth creamy texture).

In general, all types of gelatin will work as one of the gums of the stabilizer system. For example, both beef-based and pork-based gelatin will work, where these make up the majority of the gelatins. Gelatin typically differs depending on its source, method of manufacture, purity, etc. Any type of gelatin or firmness can be used, but preferably a 200 bloom strength or 240 bloom strength is used. Gelatin or carrageenan used without any other stabilizer would provide a dairy product having a texture that is too firm. The other stabilizers are required (i.e., such as at least one additional gum) to help provide creaminess, texture, and to balance the firming properties that the gelatin or carrageenan contributes. Similarly, if a two-gum system only containing gelatin and carrageenan were made it would also be too firm.

When using a two-gum system, from 0.4% to 1% gelatin based on the total dairy product is to be used in the formulation, with the second gum comprising the same amount or less. When the second gum comprises greater than the gelatin level, an undesirable product that is chewy and too moist typically can result. Similarly, when a three-gum system is used it is preferable that from 0.4% to 1% gelatin based on the total dairy product or from 0.1% to 0.4% carrageenan based on the total dairy product is used, with the balance comprising at least two other gums, up to a total gum content of 2.5%. Typically, the types of gums used in the blend of the stabilizer system as well as the ratio of the gums used can have an impact on the properties of the final texture of the dairy product.

It is preferable to preblend the stabilizer system before addition to the dairy component mixture. The stabilizer system may be made solely from gums without additional ingredients (i.e., saft or sorbic acid), however, the preblended stabilizer system can also contain, and preferably does contain, other dry additives (i.e., salt or sorbic acid) that can be used in the formulation. It is preferred to add these additional ingredients to the stabilizer system to aid in forming a homogeneous stabilizer system and to aid in dispersing the stabilizer system more completely. Alternatively, the additional ingredients, if any, can be added directly to the dairy mixture rather than the stabilizer system mixture first, however, the stabilizer system may not disperse completely as a result. The stabilizer system may also be directly added to the dairy mixture without being preblended (i.e., gums added separately). However, adding the stabilizer system ingredients individually or in a preblended form without other additional additives may cause clumping, thereby requiring more mixing later and/or higher shear mixing to obtain the desired homogeneous mixture. It is preferable, therefore, to separately mix the stabilizer system and various additional ingredients first (i.e., salt and sorbic acid) and then to add this to the dairy component mixture.

The stabilizer systems can yield hot aerated dairy products that have a similar texture as compared to a cold-aerated cream cheese product without the stabilizer system. In terms of the stabilizer system, it can comprise at least two gums and any additional additives, such that the total amount of gum in the stabilizer system alone in one aspect can comprise from 55% to 100%, which is equivalent to from 0.5% to 2.5% in the total cream cheese product. For instance, in addition to the at least two gums, the stabilizer system may also comprise salt and sorbic acid, and/or other additives. In one aspect, from 0.3% to 0.6% salt can be added and up to 0.1% sorbic acid, both based on the total cream cheese product formulation.

The temperature of the resulting mixture is heated to a high temperature, i.e., greater than 140°F (60.0°C), prior to or at the same time as aeration of the mixture. At a minimum, the temperature should be at least high enough to avoid microbial growth. Typically, the temperature upon aeration is higher than 150°F (65.6°C) with a maximum temperature of 180°F (82.2°C). The amount of aeration, or percent overrun, can be from 2 to 20% overrun, or in particular, it can be from 2 to 16% overrun. Typically, less than 2% overrun is too low to provide a desirable volume increase and texture change. In general, enough air or gas must be supplied in order to yield a light and airy texture in the dairy product. The gases used to aerate the dairy product can be any that are known in the art, such as nitrogen or air. The percent of cream cheese in the formula can influence the amount of overrun in the finished product. For instance, if greater than 66% cream cheese is used, the overrun may be too low. Therefore, amounts of cream cheese less than 66% and greater than 10% are preferred.

After the aeration step, the resulting hot dairy product can be packaged at its high temperature. The temperature of the aerated dairy product does not need to be cooled, and it is thus hot-filled into the desired packages. Therefore, the temperature upon packaging of the dairy product is also greater than 140°F (60.0°C), and typically greater than 150°F (65.6°C). Typically, the packages are hot-filled and packaged at a temperature that is greater than 150°F (65.6°C) but less than 180°F (82.2°C). Once the packages are hot-filled, they are hermetically sealed and allowed to cool. Typically, at ambient temperatures, the packaged hot dairy product will cool to room temperature within 24 hours. If desired, of course, the product can be cooled faster using conventional techniques. The packaged dairy product can have a shelf life of at least 3 months, and preferably at least 12 months when stored at ambient temperatures and at least 18 months when stored at refrigerated temperatures without requiring aseptic processing or packaging techniques.

Other optional ingredients that may be added can comprise a protein, salt, an acid or base, flavorings, spices, sweeteners, colorants, and the like. Generally, the pH is adjusted to between 3.7 to 4.6 pH using any common food-grade acidulant (e.g., citric acid, lactic acid, acetic acid, or hydrochloric acid). A preservative, such as sorbic acid or benzoic acid or their salts, can be added in this pH range.

Various protein sources can also be added to the formulation and can comprise cream cheese, whey protein concentrate, nonfat dry milk, milk protein concentrate, and the like. The whey protein concentrates (WPC) used can comprise many varieties such as WPC 34, WPC 53, and WPC 80. The protein source can be present in an amount between 3 to 10 percent by weight. Additionally, a polysaccharide component (e.g., inulin) can be included instead of, or in addition to, a protein source.

The hot viscosity of the final aerated dairy product is generally between 4 to 60 Pascal at 180°F (82.2°C). The cold viscosity of the final dairy product is generally between 200 to 1300 Pascal at room temperature. Furthermore, the water activity of the final product can be 1.0 and can have a moisture content of 50 to 75%, preferably 50 to 60%. The product is considered to be a high moisture dairy product.

A method of making an aerated dairy food composition comprises mixing together 10 to 66% of a dairy food base, 20 to 30% fat, and 0.5 to 2.5% hydrocolloid-based stabilizer system to form a mixture. The mixture can then be aerated from 2% to 20% overrun at a temperature of 150°F (65.6°C) or greater. The aerated dairy food product is then hot-filled into packages at temperatures between 150°F (65.6°C) and 180°F (82.2°C), and the packages are hermetically sealed. No aseptic packaging techniques are required. The packaged aerated dairy food product is allowed to cool to provide an organoleptically pleasing, high-moisture, shelf stable, aerated dairy food product.

Turning to FIG. 1, a flow chart is shown generally illustrating the method of this invention. First, optional ingredients such as a protein source can be combined with water and mixed to form a solution. The solution is then combined with cream cheese and mixed to form a cream cheese mixture. The pH of the cream cheese mixture can then be adjusted to 3.7 to 4.6. The mixture is then heated between 140°F (60.0°C) to 180°F (82.2°C). A fat source is then added to the mixture, which includes a high melting point fat, and the mixture is homogenized. The stabilizer system components are then preblended, and are added to the mixture after homogenization. The mixture is then heated to a temperature greater than 150°F (65.6°C) and held for a time. After heating, the hot mixture is whipped to aerate the mixture. Then, the hot aerated cream cheese product is hot-filled into packages and sealed. The cream cheese is then allowed to cool inside of its sealed package.

The following examples describe and illustrate certain processes to prepare high-moisture, shelf stable, aerated cream cheese products of this invention. These examples are intended to be merely illustrative and not limiting thereof in either scope or spirit. Those skilled in the art will readily understand that variations of the materials, conditions, and processes described in these can be used. Unless otherwise noted, all percentages and ratios are by weight.

### EXAMPLE 1

This example illustrates the preparation of a sample formulation used for the makeup of a high-moisture, shelf stable, aerated cream cheese product containing 54% moisture, 25% fat, and 5% protein using a three-gum stabilizer system with gelatin. 135 grams inulin, 104 grams of whey protein concentrate 34 (WPC-34) and 10.95 grams of tricalcium phosphate (TCP) were added to 502.5 grams of water and mixed slowly for 5 minutes. The water solution (752.5g; 60%) was then added to a full fat cream cheese (504g; 40%), which would result in 34% overall cream cheese in the final product after addition of the stabilizer system. The resulting mixture was then heated to 100°F (37.8°C) to melt the cream cheese. 5N HCl (1%) was used to adjust the pH to 4.1. The pH-adjusted mixture was then heated to 140°F (60.0°C). Melted hydrogenated palm oil (13.2%) was added to the mixture, and mixed well and then the resulting mixture was homogenized at 3000psi (20.7MPa) in a first stage and 500psi (3.45MPa) in a second stage (i.e., 3000psi (20.7MPa)/ 500psi (3.45MPa)). After the mixture had been homogenized, 1472 grams were weighed and added to a second Thermomix. The homogenized mixture contained 9.18% inulin, 7.1% WPC-34, 0.74% TCP, 34.19% water, 34.29% cream cheese, 1.02% HCl, and 13.47% palm oil.

The three-gum stabilizer system was prepared; it contained CMC, carob gum, gelatin, sorbic acid, and salt. The dry ingredients were preblended (see Table 1-2). The preblended stabilizer system (2.06%) was added to the homogenized mixture (97.99%) from above. After mixing for five minutes, the mixture was heated to 180°F (82.2°C) and held at that temperature for 5 minutes. This hot cream cheese slurry was then poured into a Hobart jacketed mixer (Model No. N-50) and aerated by whipping at high speed (i.e., a speed setting of 3) for 3 minutes at 150°F (65.6°C). The overrun was 12.5%. The sample was hot-filled into 8 oz (230g) tubs while at above 150°F (65.6°C) and sealed; and the samples were allowed to cool within the tubs.

Table 1-1 below shows the high moisture, shelf stable aerated cream cheese product formulation. The resulting cream cheese product had a hot viscosity of 4.38 Pa measured at a temperature of 170°F (76.7°C) to 180°F (82.2°C) and a viscosity of 1219 Pa measured at room temperature. The resulting product had a good texture and was light and airy; it retained its overrun and air cell structure for at least 3 months when stored at room temperature.

**Table 1-1**

| **Ingredient** | **%** |
|---|---|
| **Full fat cream cheese** | **33.6** |
| **Water** | **33.5** |
| **Hyd. Palm Oil** | **13.15** |
| **Inulin** | **9** |
| **WPC-34** | **6.96** |
| **TCP** | **0.73** |
| **5N HCl** | **1** |
| **Stabilizer System** | **2.06** |

**Table 1-2**

| **Ingredient** | **%** |
|---|---|
| **CMC** | **9.71** |
| **Carob gum** | **9.71** |
| **Gelatin** | **48.54** |
| **Sorbic Acid** | **4.85** |
| **Salt** | **27.18** |

### EXAMPLE 2

Another sample formulation was used for the makeup of a high-moisture, shelf stable aerated cream cheese product as in Example 1 but comprising a three-gum stabilizer system and containing a higher amount (47%) of cream cheese than Example 1. The ingredients with carrageenan used in placed of gelatin and their amounts are shown in Table 2-1. The same method as used in Example 1 was used. The homogenized mixture contained 9.13% inulin, 4.39% WPC-34, 0.72% TCP, 28.13% water, 47.68% cream cheese, 1.12% HCl, and 8.84% palm oil.

The three-gum stabilizer system was prepared. The stabilizer system in this example contained CMC, carob gum, carrageenan gum (e.g., Kappa-carrageenan), sorbic acid, and salt. The dry ingredients were preblended as shown in Table 2-2. The preblended stabilizer system (1.42%) was added to the homogenized mixture (98.58%) from above. After mixing for five minutes, the mixture was heated as in Example 1. An overrun of 2.70% was obtained. The sample was hot-filled as in Example 1.

Table 2-1 below shows the high moisture, shelf stable aerated cream cheese product formulation. The resulting cream cheese product had a hot viscosity of 4.38 Pa and a cold viscosity of 377 Pa, measured at the same temperatures as in Example 1. The resulting product had a good texture and was light and airy; it retained its overrun and air cell structure for at least 3 months when stored at room temperature.

**Table 2-1**

| **Ingredient** | **%** |
|---|---|
| **Full fat cream cheese** | **47** |
| **Water** | **27.73** |
| **Hyd. Palm Oil** | **8.71** |
| **Inulin** | **9** |
| **WPC-34** | **4.33** |
| **TCP** | **0.71** |
| **5N HCl** | **1.1** |
| **Stabilizer System** | **1.42** |

**Table 2-2**

| **Ingredient** | **%** |
|---|---|
| **CMC** | **28.17** |
| **Carob gum** | **21.13** |
| **K-carrageenan gum** | **10.56** |
| **Sorbic Acid** | **7.04** |
| **Salt** | **33.1** |

### EXAMPLE 3

A similar sample formulation was used for the makeup of a high-moisture, shelf stable aerated cream cheese product as in Example 2, except with a higher level of cream cheese (60%) and a higher level of the three gum stabilizer. The ingredients and amounts are shown in Table 3-1. The same method used in Examples 1 and 2 was used. The homogenized mixture contained 9.12% inulin, 1.73% WPC-34, 0.70% TCP, 22.20% water, 60.81% cream cheese, 1.11% HCl, and 4.33% palm oil.

The three-gum stabilizer system was prepared. The stabilizer system in this example contained CMC, carob gum, carrageenan gum (e.g., K-carrageenan), sorbic acid, and salt. The dry ingredients were preblended as shown in Table 3-2. The preblended stabilizer system (1.33%) was added to the homogenized mixture (98.67%) from above. After mixing for five minutes, the mixture was heated as in Example 1. An overrun of 3.00% was obtained. The sample was hot-filled as in Example 1.

Table 3-1 below shows the high moisture, shelf stable aerated cream cheese product formulation. The resulting cream cheese product had a hot viscosity of 13 Pa and a cold viscosity of 465 Pa, measured at the same temperatures as in Example 1. The resulting product had a good texture and was light and airy; it retained its overrun and air cell structure for at least 3 months when stored at room temperature.

**Table 3-1**

| **Ingredient** | **%** |
|---|---|
| **Full fat cream cheese** | **60** |
| **Water** | **21.9** |
| **Hyd. Palm Oil** | **4.27** |
| **Inulin** | **9** |
| **WPC-34** | **1.71** |
| **TCP** | **0.69** |
| **5N HCl** | **1.1** |
| **Stabilizer System** | **1.33** |

**Table 3-2**

| **Ingredient** | **%** |
|---|---|
| **CMC** | **30.08** |
| **Carob gum** | **22.56** |
| **K-carrageenan gum** | **11.28** |
| **Sorbic Acid** | **7.52** |
| **Salt** | **27.94** |

### COMPARATIVE EXAMPLE 4

A comparative sample product containing 54% moisture, 25% fat, and 5% protein and comprising a three-gum stabilizer system containing neither gelatin or carrageenan. The formulation is shown in Table 4-1; the stabilizer formula is shown in Table 4-2. The same method used in Example 1 was used. The homogenized mixture contained 9.12% inulin, 6.0% WPC-34, 0,69% TCP, 26.62% water, 47.65% cream cheese, 1.12%HCl, and 8.80% palm oil.

The three-gum stabilizer system was prepared. The stabilizer system in this comparative example contained CMC, carob gum, xanthan gum, sorbic and salt. The dry ingredients were preblended (see Table 4-2). The preblended stabilizer system (1.36%) was added to the homogenized mixture (98.64%) from above. After mixing for five minutes, the mixture was heated as in Example 1. An overrun of 3.46% was obtained. The sample was hot-filled as in Example 1.

Table 4-1 below shows the high moisture cream cheese product formulation. The resulting cream cheese product had a hot viscosity of 21.9 Pa and a cold viscosity of 1812 Pa, measured at the same temperatures as in Example 1.

This sample, prepared without either gelatin or carrageenan, had a texture and consistency significantly different from the aerated cream cheese product of the earlier examples. The texture was chewy and rubbery with a leather-like consistency. Although not wishing to be limited by theory, the unacceptable texture was due to a lack of a proper support structure to sustain the desired aerated structure; this was likely due to the lack of either gelatin or carrageenan in the stabilizer system.

**Table 4-1**

| **Ingredient** | **%** |
|---|---|
| **Full fat cream cheese** | **47** |
| **Water** | **26.26** |
| **Hyd. Palm Oil** | **8.68** |
| **Inulin** | **9** |
| **WPC-34** | **5.92** |
| **TCP** | **0.68** |
| **5N HCl** | **1.1** |
| **Stabilizer System** | **1.36** |

**Table 4-2**

| **Ingredient** | **%** |
|---|---|
| **CMC** | **29.41** |
| **Carob gum** | **22.1** |
| **Xanthan gum** | **8.82** |
| **Sorbic Acid** | **7.35** |
| **Salt** | **32.35** |

### EXAMPLE 5

Another sample formulation was used for the makeup of a high-moisture shelf stable aerated cream cheese product as in Example 1 but comprising a two-gum stabilizer system. The ingredients with gelatin and their amounts are shown in Table 5-1. The same method as used in Example 1 was used. The homogenized mixture contained 9.17% inulin, 7.09% WPC-34, 0.74% TCP, 34.13% water, 34.44% cream cheese, 1.02%HCl, and 13.40% palm oil.

The two-gum stabilizer system was prepared. The stabilizer system in this example contained carob gum, gelatin, sorbic acid, and salt. The dry ingredients were preblended using the amounts shown in Table 5-2. The preblended stabilizer system (1.86%) was added to the homogenized mixture (98.14%) from above. After mixing for five minutes, the mixture was heated as in Example 1. An overrun of 9.8% was obtained. The sample was hot-filled as in Example 1.

Table 5-1 below shows the high moisture, shelf stable aerated cream cheese product formulation. The resulting cream cheese product had a hot viscosity of 13.16 Pa and a cold viscosity of 1189 Pas, measured at the same temperatures as in Example 1. The resulting product had a good texture and was light and airy; it retained its overrun and air cell structure for at least 3 months when stored at room temperature.

**Table 5-1**

| **Ingredient** | **%** |
|---|---|
| **Full fat cream cheese** | **33.8** |
| **Water** | **33.5** |
| **Hyd. Palm Oil** | **13.15** |
| **Inulin** | **9** |
| **WPC-34** | **6.96** |
| **TCP** | **0.73** |
| **5N HCl** | **1** |
| **Stabilizer System** | **1.86** |

**Table 5-2**

| **Ingredient** | **%** |
|---|---|
| **Carob gum** | **21.5** |
| **Gelatin** | **43.01** |
| **Sorbic Acid** | **5.38** |
| **Salt** | **30.11** |

### EXAMPLE 6

A sample formulation of a high-moisture shelf stable aerated cream cheese product similar to Example 5 was made except having a higher level of cream cheese (60%). The ingredients and amounts are shown in Table 6-1. The same method used in Example 1 was used. The homogenized mixture contained 9.15% inulin, 1.74% WPC-34, 0.70% TCP, 21.92% water, 61.03% cream cheese, 1.12% HCl, and 4.34% palm oil.

The same ingredients were used for the stabilizer system as in Example 5. The dry ingredients of the stabilizer system were preblended as shown in Table 6-2. The preblended system (1.68%) was added to the homogenized mixture (98.32%) from above. After mixing for five minutes, the mixture was heated as in Example 1. An overrun of 5.8% was obtained. The sample was hot-filled as in Example 5. Table 6-1 below shows the high moisture, shelf stable aerated cream cheese product formulation. The resulting cream cheese product had a hot viscosity of 26.32 Pa and a cold viscosity of 1254 Pa, measured at the same temperatures as in Example 5. The resulting sample had a texture and consistency that was similar to the results of Example 5, such that the sample product had a good texture and was light and airy; it retained its overrun and air cell structure for at least 3 months when stored at room temperature.

**Table 6-1**

| **Ingredient** | **%** |
|---|---|
| **Full fat cream cheese** | **60** |
| **Water** | **21.55** |
| **Hyd. Palm Oil** | **4.27** |
| **Inulin** | **9** |
| **WPC-34** | **1.71** |
| **TCP** | 0.69 |
| **5N HCl** | **1.1** |
| **Stabilizer System** | **1.68** |

**Table 6-2**

| **Ingredient** | **%** |
|---|---|
| **Carob gum** | **23.8** |
| **Gelatin** | **47.62** |
| **Sorbic Acid** | **5.95** |
| **Salt** | **22.62** |

### COMPARATIVE EXAMPLE 7

A comparative sample product containing 54% moisture, 25% fat, and 5% protein was made a two-gum stabilizer system with gelatin. The formulation is shown in Table 7-1; stabilizer formulation is shown in Table 7-2. The same method used in Example 1 was used. The homogenized mixture contained 9.17% inulin, 7.09% WPC-34, 0.74% TCP, 34.13% water, 34.44% cream cheese, 1.02%HCl, and 13.40% palm oil.

The two-gum stabilizer system was prepared. The stabilizer system in this comparative example contained only carob gum, gelatin, sorbic acid, and salt. The dry ingredients were preblended using the amounts shown in Table 7-2. The preblended stabilizer system (1.86%) was added to the homogenized mixture (98.14%). After mixing for five minutes, the mixture was heated as in Example 1. An overrun of 4.7% was obtained. The sample was hot-filled as in Example 1.

Table 7-1 below shows the high moisture cream cheese product formulation. The resulting cream cheese product had a hot viscosity of 50.46 Pa and a cold viscosity of 1233 Pa, measured at the same temperatures as in Example 1.

This sample, prepared with a level of the second gum that was higher than the lower level of gelatin, had a texture and consistency significantly different from the aerated cheese product of examples 5 and 6. The texture was chewy and rubbery. The resultant texture did not exhibit desirable characteristics due to the level of the second gum (carob) being higher (i.e., 0.8% of the total cream cheese product) than the level of gelatin (i.e., 0.4% of the total cream cheese product) provided.

**Table 7-1**

| **Ingredient** | **%** |
|---|---|
| **Full fat cream cheese** | **33.8** |
| **Water** | **33.5** |
| **Hyd. Palm Oil** | **13.15** |
| **Inulin** | **9** |
| **WPC-34** | **6.96** |
| **TCP** | **0.73** |
| **5N HCl** | **1** |
| **Stabilizer System** | **1.86** |

**Table 7-2**

| **Ingredient** | **%** |
|---|---|
| **Carob gum** | **43.01** |
| **Gelatin** | **21.5** |
| **Sorbic acid** | **5.38** |
| **Salt** | **30.11** |

### EXAMPLE 8

A sample formulation was used for the makeup of a high-moisture shelf stable aerated cream cheese product as in Example 1 but comprising a three-gum stabilizer system without inulin. The ingredients without inulin and their amounts are shown in Table 8-1. The same method as used in Example 1 was used. The homogenized mixture contained 0% inulin, 16.32% WPC-34, 0.56% TCP, 33.48% water, 35.67% cream cheese, 1.12% HCl, and 12.85% palm oil.

The three-gum stabilizer system was prepared. The stabilizer system in this example contained CMC, carob gum, gelatin, sorbic acid, and salt. The dry ingredients were preblended using the amounts shown in Table 8-2. The preblended stabilizer system (1.88%) was added to the homogenized mixture (98.12%). After mixing for five minutes, the mixture was heated as in Example 1. An overrun of 12.8% was obtained. The sample was hot-filled as in Example 1.

Table 8-1 below shows the high moisture, shelf stable aerated cream cheese product formulation. The resulting cream cheese product had a hot viscosity of 21.93 Pa and a cold viscosity of 776 Pa, measured at the same temperatures as in Example 1. The resulting sample had a texture and consistency comparable to a high moisture shelf stable aerated cream cheese product made with inulin, such as in Example 1, and had a good texture and was light and airy; it retained its overrun and air cell structure for at least 3 months when stored at room temperature.

**Table 8-1**

| **Ingredient** | **%** |
|---|---|
| **Full fat cream cheese** | **35** |
| **Water** | **32.85** |
| **Hyd. Palm Oil** | **12.61** |
| **Inulin** | **0** |
| **WPC-34** | **16.01** |
| **TCP** | **0.55** |
| **5N HCl** | **1.1** |
| **Stabilizer System** | **1.88** |

**Table 8-2**

| **Ingredient** | **%** |
|---|---|
| **CMC** | **21.28** |
| **Carob gum** | **10.64** |
| **Gelatin** | **42.55** |
| **Sorbic Acid** | **5.32** |
| **Salt** | **20.21** |

### EXAMPLE 9

A summary table of the results of examples 1-8 is indicated below in Table 9. It is believed that Example 4 had undesirable results because it did not contain either gelatin or carrageenan in its stabilizer system. It is further believed that Example 7 had undesirable results because of the high amount of the second gum (i.e., 0.8% carob) present in the stabilizer system as compared to the lower amount of gelatin (i.e., 0.4% of total product). In a desirable two gum system, for example, the first gum is preferably gelatin in a range between 0.4% to 1%, with the second gum preferably at a level that is approximately equal to or less than the gelatin amount. For instance, in Example 7, when the level of the second gum was above that of the gelatin amount, the final product became chewy and moist rather than light, dry, and airy as desired. When the second gum remained at a level that was at the gelatin level or below, as in Examples 5 and 6, the desired texture was maintained throughout the product during the storage period tested. Additionally, the types of gums used as the second or third gums can also have an impact on the final texture.

In a three-gum system, the result that did not contain either gelatin or carrageenan had failing results because the stabilizer system did not contain a gum that maintained the air cell matrix. Furthermore, in the three-gum stabilizer system passing results were obtained with either carrageenan or gelatin, however, gelatin is the preferred first gum for the three gum systems.

**Table 9: Summary of Results of Examples 1-8**

| **Example No.** | **Percent Overrun** | **Hot Viscosity (Pa)** | **Cold Viscosity (Pa)** | **Two or Three gums** | **Percent Cream Cheese Added** | **Inulin** | **Gelatin/ K- Carrageenan In Total Product** | **Other Gums In Total Product** | **Evaluation** |
|---|---|---|---|---|---|---|---|---|---|
| **1** | **12.5** | **4.38** | **1219** | **3** | **34%** | **Yes** | **1% gelatin** | **CMC (0.2%); Carob (0.2%)** | **Good** |
| **2** | **2.7** | **4.38** | **377** | **3** | **47%** | **Yes** | **0.15% K-Cerrageenan** | **CMC (0.4%); Carob (0.3%)** | **Good** |
| **3** | **3** | **13** | **465** | **3** | **60%** | **Yes** | **0.15% K-Carrageenan** | **CMC (0.4%); Carob (0.3%)** | **Good** |
| **Comparative 4** | **3.46** | **21.9** | **1812** | **3** | **47%** | **Yes** | **Neither** | **CMC (0.4%): Carob (0.3%): Xanthan (0.12%)** | **Unacceptable** |
| **5** | **9.8** | **13.16** | **1189** | **2** | **34%** | **Yes** | **0.8% gelatin** | **Carob (0.4%)** | **Good** |
| **6** | **5.8** | **26.32** | **1254** | **2** | **60%** | **Yes** | **0.8% gelatin** | **Carob (0.4%)** | **Good** |
| **Camparative 7** | **4.7** | **50.48** | **1233** | **2** | **34%** | **Yes** | **0.4% gelatin** | **Carob (0.8%)** | **Unacceptable** |
| **8** | **12.8** | 21.93 | **776** | **3** | **35%** | **No** | **0.8% gelatin** | **CMC (0.4%); Carob (0.2%)** | **Good** |

## Claims

1. An aerated food composition comprising a dairy food base, a fat source at least partially comprising a high-melting point fat having a melting point temperature between 37.8°C to 43.3°C (100°F to 110° F), and a hydrocolloid-based stabilizer system in an amount effective to provide a high-moisture shelf stable, aerated dairy food product;
wherein the dairy food product is aerated between 2 to 20% overrun at a temperature greater than 65.6°C (150°F) for microstability and subsequently filled into packages at a final temperature greater than 65.6°C (150°F) but less than 82.2°C (180°F) while maintaining its aerated structure;
wherein the hydrocolloid-based system comprises: (1) two gums where one of the gums is gelatin in a range between 0.4% to 1% and the other gum is at a level that is equal to or less than an amount of the gelatin; or (2) at least three gums where one of the gums is gelatin or carrageenan;
and wherein the dairy food product has a shelf life of at least three months at ambient temperature.

2. The aerated food composition as defined in claim 1, wherein the aerated food composition comprises from 10% to 66% of the dairy food base, from 20 to 30% of the fat source, and from 0.5 to 2.5% of the hydrocolloid-based stabilizer system.

3. The aerated food composition as defined in Claim 1 or 2, wherein the fat source comprises 4.25% to 20% of the high melting point fat and is selected from the group consisting of palm oil, coconut oil, hydrogenated soybean oil, palm kernel oil, and low fat cream cheese.

4. A method of making an aerated dairy food composition, the method comprising:
mixing 10% to 66% dairy food base, 20% to 30% fat where between 4.25% to 20% of the total fat includes a high melting point fat having a melting point temperature between 37.8°C to 43.3°C (100°F to 110°F), and 0.5% to 2.5% of a stabilizer system comprising: (1) two gums where one of the gums is gelatin in a range between 0.4% to 1% and the other gum is at a level that is equal to or less than an amount of the gelatin; or (2) at least three gums where one of the gums is gelatin or carrageenan, together to form a mixture;
aerating the mixture to an aeration level of 2% to 20% overrun at a temperature of at least 65.6°C (150°F);
filling packages with the aerated dairy food product at temperatures between 65.6°C to 82.2°C (150°F to 180°F);
sealing the packages with a hermetic seal after filling; and
cooling the aerated dairy food product while in the package to provide an organoleptically-pleasing, shelf-stable, high-moisture aerated dairy food product having shelf stability of at least three months at ambient temperature.

5. The method of claim 4, further comprising aerating the mixture with either air or nitrogen.

6. The method of Claim 4 or 5, wherein the aerated dairy food product has a cold viscosity of 200 to 1300 Pascal at room temperature and a hot viscosity of 4 to 60 Pascal at the final temperature.

7. The method of any one of Claims 4 to 6, wherein the dairy food base is cream cheese.

8. The method of any one of Claims 4 to 7, wherein the aerated mixture has a pH of 3.7 to 4.6.

9. The composition of any one of Claims 1 to 3 or the method of any one of Claims 4 to 8 wherein the stabilizer system comprises two gums, a first gum being gelatin and a second gum is selected from the group consisting of carboxy methyl cellulose, carob bean gum, xanthan gum, and methocel.

10. The method of claim 9, wherein the gelatin comprises from 0.4% to 1% of the final dairy food product.

11. The composition of any one of Claims 1 to 3 or the method of any one of Claims 4 to 10, wherein the stabilizer system comprises at least three gums, a first gum being either gelatin or carrageenan and a second and third gum is selected from the group consisting of carboxy methyl cellulose, carob bean gum, xanthan gum, and methocel.

12. The method of claim 11, wherein one of the gums is carrageenan and the carrageenan comprises from 0.1% to 0.4% of the final dairy food product.

13. The composition of claim 1, wherein the composition comprises a mixture of 10 to 66 percent of the dairy food base comprising a cream cheese product, 20 to 30 percent fat comprising 4.25 to 20 percent of a high melting point fat, and 0.5 to 2.5 percent of a hydrocolloid-based stabilizer system;
wherein the mixture has a pH of 3.7 to 4.6;
wherein the high melting point fat has a melting point between 37.8°C to 43.3°C (100°F to 110°F) and is an animal fat or a vegetable fat;
wherein the hydrocolloid-based stabilizer system comprises at least two gums where one gum is gelatin and the other gum is selected from the group consisting of carboxy methyl cellulose, carob bean gum, xanthan gum, and methocel, or at least three gums where one of the gums is gelatin or carrageenan and the other gums are selected from the group consisting of carboxy methyl cellulose, carob bean gum, xanthan gum, and methocel;
wherein the mixture is aerated and filled into packages at temperatures greater than 65.6°C (150°F) to produce the dairy product;
wherein the dairy product has a moisture content of 50 to 75 percent; and
wherein the dairy product has a shelf life of at least 12 months when stored at ambient temperatures or at least 18 months when stored at refrigeration temperatures.

## Patentansprüche

1. Luftdurchsetzte Lebensmittelzusammensetzung, umfassend eine Milchproduktbasis, eine Fettquelle, die mindestens teilweise ein Fett mit einem hohem Schmelzpunkt umfasst, das eine Schmelzpunkt-Temperatur zwischen 37,8 °C bis 43,3 °C (100 °F bis 110 °F) besitzt, und ein Stabilisator-System auf Hydrokolloid-Basis in einer Menge, die so wirksam ist, dass sie ein bei hoher Luftfeuchtigkeit haltbares, luftdurchsetztes Milchprodukt bietet;
wobei das Milchprodukt zu 2 bis 20 % luftdurchsetzt ist, bei einer Temperatur höher als 65,6 °C (150 °F) kurz für die Mikrobeständigkeit erhitzt und anschließend bei einer Endtemperatur höher als 65,6 °C (150 °F) aber weniger als 82,2 °C (180 °F) in Verpackungen abgefüllt wird, während es seine mit Luft aufgelockerte Struktur beibehält;
wobei das System auf Hydrokolloid-Basis Folgendes umfasst: (1) zwei Verdickungsmittel, von denen ein Verdickungsmittel Gelatine in einem Bereich von 0,4 % bis 1 % istund das andere Verdickungsmittel in einer Menge vorliegt die geringer oder gleich der Menge der Gelatine ist; oder (2) mindestens drei Verdickungsmittel, wobei eines der Verdickungsmittel Gelatine oder Carrageen ist;
und wobei das Milchprodukt über eine Mindesthaltbarkeit von mindestens drei Monaten bei Umgebungstemperatur verfügt.

2. Die luftdurchsetzte Lebensmittelzusammensetzung nach Anspruch 1, wobei die luftdurchsetzte Lebensmittelzusammensetzung 10 % bis 66 % der Milchproduktbasis, 20 bis 30 % der Fettquelle und 0,5 bis 2x,5 % des Stabilisator-Systems auf Hydrokolloid-Basis umfasst.

3. Die luftdurchsetzte Lebensmittelzusammensetzung nach Anspruch 1 oder 2, wobei die Fettquelle 4,25 % bis 20 % Fett mit hohem Schmelzpunkt umfasst und ausgewählt ist aus der Gruppe bestehend aus Palmöl, Kokosöl, hydriertem Sojaöl, Palmkernöl und fettarmem Frischkäse.

4. Verfahren zur Herstellung einer luftdurchsetzten Milchproduktzusammensetzung, das Verfahren umfassend:
Mischen von 10 % bis 66 % Milchproduktbasis, 20 % bis 30 % Fett, wobei zwischen 4,25 % und 20 % des Gesamtfetts ein Fett mit hohem Schmelzpunkt umfasst, das eine Schmelzpunkt-Temperatur zwischen 37,8 °C bis 43,3 °C (100 °F bis 110 °F) besitzt, sowie 0,5 % bis 2,5 % eines Stabilisator-Systems, umfassend: (1) zwei Verdickungsmittel, von denen ein Verdickungsmittel Gelatine in einem Bereich von 0,4 % bis 1 % ist und das andere Verdickungsmittel in einer Menge vorliegt die geringer oder gleich der Menge der Gelatine ist; oder (2) mindestens drei Verdickungsmittel, wobei eines der Verdickungsmittel Gelatine oder Carrageen ist, die zusammen eine Mischung bilden;
Durchsetzen der Mischung mit Luft bis zu einem Auflockerungsgrad von 2 % bis 20 %, die bei eine Temperatur von mindestens 65,6 °C (150 °F) kurz erhitzt wird.
Befüllen der Verpackungen mit dem luftdurchsetzten Milchprodukt bei Temperaturen zwischen 65,6 °C und 82,2 °C (150 °F und 180 °F);
Verschließen der Verpackungen nach der Befüllung mit einer hermetischen Versiegelung; und
Kühlen des luftdurchsetzten Milchprodukts in der Verpackung, um ein sensorisch ansprechendes, haltbares, luftdurchsetztes Milchprodukt mit hoher Feuchtigkeit zu bieten, das über eine Mindesthaltbarkeit von mindestens drei Monaten bei Umgebungstemperatur verfügt.

5. Verfahren nach Anspruch 4, ferner umfassend ein Luftdurchsetzen der Mischung mit entweder Luft oder Stickstoff.

6. Verfahren nach Anspruch 4 oder 5, wobei das luftdurchsetzte Milchprodukt über eine Kälte-Viskosität von 200 bis 1300 Pascal bei Raumtemperatur und eine Heiß-Viskosität von 4 bis 60 Pascal bei der Endtemperatur verfügt.

7. Verfahren nach jedem der Ansprüche 4 bis 6, wobei es sich bei der Milchproduktbasis um Frischkäse handelt.

8. Verfahren nach jedem der Ansprüche 4 bis 7, wobei die luftdurchsetzte Mischung einen pH-Wert von 3,7 bis 4,6 aufweist.

9. Zusammensetzung nach jedem der Ansprüche 1 bis 3 oder Verfahren nach jedem der Ansprüche 4 bis 8, wobei das Stabilisator-System zwei Verdickungsmittel umfasst, wobei ein erstes Verdickungsmittel Gelatine ist und ein zweites Verdickungsmittel aus der Gruppe bestehend aus Carboxymethylcellulose, Johannisbrotkernmehl, Xanthangummi und Methocel ausgewählt ist.

10. Verfahren nach Anspruch 9, wobei die Gelatine 0,4 % bis 1 % des endgültigen Milchprodukts umfasst.

11. Zusammensetzung nach jedem der Ansprüche 1 bis 3 oder Verfahren nach jedem der Ansprüche 4 bis 10, wobei das Stabilisator-System mindestens drei Verdickungsmittel umfasst, wobei ein erstes Verdickungsmittel entweder Gelatine oder Carrageen ist und ein zweites und drittes Verdickungsmittel aus der Gruppe, bestehend aus Carboxymethylcellulose, Johannisbrotkernmehl, Xanthangummi und Methocel ausgewählt ist.

12. Verfahren nach Anspruch 11, wobei eines der Verdickungsmittel Carrageen ist und das Carrageen 0,1 % bis 0,4 % des endgültigen Milchprodukts umfasst.

13. Zusammensetzung nach Anspruch 1, wobei die Zusammensetzung eine Mischung von 10 bis 66 Prozent der Milchproduktbasis umfasst, die ein Frischkäseprodukt, 20 bis 30 Prozent Fett, das 4,25 bis 20 Prozent eines Fetts mit hohem Schmelzpunkt umfasst, und 0,5 bis 2,5 Prozent eines Stabilisator-System auf Hydrokolloid-Basis, umfasst;
wobei die Mischung einen pH-Wert von 3,7 bis 4,6 aufweist;
wobei das Fett mit dem hohen Schmelzpunkt einen Schmelzpunkt zwischen 37,8 °C und 43,3 °C (100 °F bis 110 °F) besitzt und ein tierisches oder pflanzliches Fett ist;
wobei das Stabilisator-System auf Hydrokolloid-Basis mindestens zwei Verdickungsmittel umfasst, wobei ein Verdickungsmittel Gelatine ist und das andere Verdickungsmittel aus der Gruppe, bestehend aus Carboxymethylcellulose, Johannisbrotkernmehl, Xanthangummi und Methocel ausgewählt ist, oder mindestens drei Verdickungsmittel umfasst, wobei ein Verdickungsmittel entweder Gelatine oder Carrageen istund das andere Verdickungsmittel aus der Gruppe, bestehend aus Carboxymethylcellulose, Johannisbrotkernmehl, Xanthangummi und Methocel ausgewählt ist;
wobei die Mischung bei Temperaturen höher als 65,6 °C (150 °F) mit Luft durchsetzt und in Verpackungen abgefüllt wird, um das Milchprodukt herzustellen;
wobei das Milchprodukt einen Feuchtigkeitsgehalt von 50 bis 75 Prozent besitzt und
wobei das Milchprodukt eine Mindesthaltbarkeit von mindestens 12 Monaten besitzt, wenn es bei einer Umgebungstemperatur gelagert wird oder mindestens 18 Monate, wenn es bei Kühltemperatur gelagert wird.

## Revendications

1. Composition alimentaire aérée comprenant une base alimentaire laitière, une source de matière grasse comprenant au moins partiellement une matière grasse à point de fusion élevé ayant une température de point de fusion entre 37,8 °C et 43,3 °C (100 °F à 110 °F) et un système stabilisateur à base d'hydrocolloïdes en une quantité efficace pour fournir un produit alimentaire laitier longue conservation aéré à forte teneur en humidité ;
dans laquelle le produit alimentaire laitier est aéré entre 2 et 20 % de foisonnement à une température supérieure à 65,6 °C (150 °F) pour la micro-stabilité et ensuite remplie dans des emballages à une température finale supérieure à 65,6 °C (150 °F) mais inférieure à 82,2 °C (180 °F) tout en maintenant sa structure aérée ;
dans laquelle le système à base d'hydrocolloïdes comprend : (1) deux gommes, une des gommes étant de la gélatine dans une plage entre 0,4 % et 1 % et l'autre gomme est à un niveau égal ou inférieur à une quantité de la gélatine ; ou (2) au moins trois gommes, une des gommes étant de la gélatine ou de la carraghénane ;
et dans laquelle le produit alimentaire laitier a une durée de conservation d'au moins trois mois à température ambiante.

2. Composition alimentaire aérée selon la revendication 1, dans laquelle la composition alimentaire aérée comprend de 10 % à 66 % de la base alimentaire laitière, de 20 à 30 % de la source de matière grasse et de 0,5 à 2,5 % du système stabilisateur à base d'hydrocolloïdes.

3. Composition alimentaire aérée selon la revendication 1 ou 2, dans laquelle la source de matière grasse comprend 4,25 % à 20 % de la matière grasse à point de fusion élevé et est choisie dans le groupe constitué d'huile de palme, huile de noix de coco, huile de soja hydrogénée, huile de palmiste et de la crème de fromage à faible teneur en matière grasse.

4. Procédé de préparation d'une composition alimentaire laitière aérée, le procédé comprenant :
le mélange de 10 % à 66 % de base alimentaire laitière, de 20 % à 30 % de matière grasse, où entre 4,25 % et 20 % de la matière grasse totale comprend une matière grasse à point de fusion élevé ayant une température de point de fusion entre 37,8 °C et 43,3 °C (100 °F à 110 °F) et de 0,5 % à 2,5 % d'un système stabilisateur comprenant : (1) deux gommes, une des gommes étant de la gélatine dans une plage entre 0,4 % et 1 % et l'autre gomme est à un niveau égal ou inférieur à une quantité de la gélatine ; ou (2) au moins trois gommes, une des gommes étant de la gélatine ou de la carraghénane, ensemble, afin de former un mélange ;
l'aération du mélange à un niveau d'aération de 2 % à 20 % de foisonnement à une température d'au moins 65,6 °C (150 °F) ;
le remplissage d'emballages avec le produit alimentaire laitier à des températures entre 65,6 °C et 82,2 °C (150 °F et 180 °F) ;
le scellage des emballages avec un joint hermétique après remplissage ; et
le refroidissement du produit alimentaire laitier tandis qu'il est dans l'emballage afin de produire un produit alimentaire laitier aéré longue conservation, à forte teneur en humidité et plaisant sur le plan organoleptique, ayant une durée de conservation d'au moins trois mois à température ambiante.

5. Procédé selon la revendication 4, comprenant en outre l'aération du mélange avec de l'air ou de l'azote.

6. Procédé selon la revendication 4 ou 5, dans lequel le produit alimentaire laitier aéré a une viscosité à froid de 200 à 1300 Pascal à température ambiante et une viscosité à chaud de 4 à 60 Pascal à la température finale.

7. Procédé selon l'une quelconque des revendications 4 à 6, dans lequel la base alimentaire laitière est de la crème de fromage.

8. Procédé selon l'une quelconque des revendications 4 à 7, dans lequel le mélange aéré a un pH de 3,7 à 4,6.

9. Composition selon l'une quelconque des revendications 1 à 3 ou procédé selon l'une quelconque des revendications 4 à 8, dans laquelle ou dans lequel le système stabilisateur comprend deux gommes, une première gomme étant de la gélatine et une seconde gomme étant choisie dans le groupe constitué de carboxyméthyl-cellulose, gomme de caroube, gomme de xanthane et méthocel.

10. Procédé selon la revendication 9, dans lequel la gélatine constitue de 0,4 % à 1 % du produit alimentaire laitier final.

11. Composition selon l'une quelconque des revendications 1 à 3 ou procédé selon l'une quelconque des revendications 4 à 10, dans laquelle ou dans lequel le système stabilisateur comprend au moins trois gommes, une première gomme étant de la gélatine ou de la carraghénane et une deuxième et une troisième gomme étant choisies dans le groupe constitué de carboxyméthyl-cellulose, gomme de caroube, gomme de xanthane et méthocel.

12. Procédé selon la revendication 11, dans lequel une des gommes est de la carraghénane et la carraghénane constitue de 0,1 % à 0,4 % du produit alimentaire laitier final.

13. Composition selon la revendication 1, dans laquelle la composition comprend un mélange de 10 à 66 pour cent de la base alimentaire laitière comprenant un produit de crème de fromage, de 20 à 30 pour cent de matière grasse comprenant de 4,25 à 20 pour cent d'une matière grasse à point de fusion élevé et de 0,5 à 2,5 pour cent d'un système stabilisateur à base d'hydrocolloïdes ;
dans laquelle le mélange a un pH de 3,7 à 4,6 ;
dans laquelle la matière grasse à point de fusion élevé présente un point de fusion entre 37,8 °C et 43,3 °C (1100 °F à 110 °F) et est une matière grasse animale ou végétale ;
dans laquelle le système stabilisateur à base d'hydrocolloïdes comprend au moins deux gommes, où une gomme est la gélatine et l'autre gomme est choisie dans le groupe constitué de carboxyméthyl-cellulose, gomme de caroube, gomme de xanthane et méthocel ou au moins trois gommes, où une des gommes est la gélatine ou la carraghénane et les autres gommes sont choisies dans le groupe constitué de carboxyméthyl-cellulose, gomme de caroube, gomme de xanthane et méthocel ;
dans laquelle le mélange est aéré et rempli dans des emballages à des températures supérieures à 65,6 °C (150 °F) afin de produire le produit laitier ;
dans laquelle le produit laitier a une teneur en humidité de 50 à 75 pour cent ; et
dans laquelle le produit laitier a une durée de conservation d'au moins 12 mois lorsqu'il est stocké à des températures ambiantes ou d'au moins 18 mois lorsqu'il est stocké à des températures de réfrigération.
